# EUROPEAN PATENT APPLICATION

(11) **EP 1 018 647 A2**
(43) Date of publication of application: **12.07.2000**
(21) Application number: 99301959.5
(22) Date of filing: 15.03.1999
(51) Int. Cl.: G01N 30/62

(54) **Micro gas detectors**

(30) Priority: 10.12.1998 US 209036
(71) Applicant: Aisin Cosmos R & D Co. Ltd., Kariya City, Aichi Pref. (JP)
(72) Inventor: Dai, Pin-Hu, Aisin Cosmos R & D Co.Ltd., Kariya City, Aichi Pref. (JP); Naruse, Yoshihiro, Aisin Cosmos R & D Co.Ltd., Kariya City, Aichi Pref. (JP); Lin, Gang, Aisin Cosmos R & D Co.Ltd., Kariya City, Aichi Pref. (JP)
(74) Representative: SERJEANTS

(57) **Abstract**

A method of detecting a gas is provided, the use of which with a GC system permits quantitative measurement of gas compounds. The detector comprises at least a base (10), a finely tapered first electrode (12) and a second electrode (14) with a specific gap spacing arranged between the first and the second electrodes(12,14), and a third electrode (16) closely disposed near, but not directly between, the first and second electrodes (12,14). The first electrode (12) is primarily used to enhance electric field, to lower the operation potential, and to help to maintain the self-sustaining discharge; the second electrode (14) is mainly used to impress an electric potential to maintain the self-sustaining discharge; the third electrode (16) is specially designed as an ignitor to impose a high electric potential pulse to ignite the self-sustaining gas discharge. Theoretically, the detection is based on the difference in ionization characteristics between various gas molecules. To ensure the stable and reliable detection, the detector must operate in the self sustaining gas discharge state. The ions and electrons generated by the ionization create an electric current which can be detected through electrodes (12,14,16). The changes of this electric current with gas composition is used as selective and discriminating sensing signals.

## Description

### Technical field

This invention relates to micro gas detectors. More particularly, to micro gas detectors of a type suitable for use with gas chromatography systems, especially suitable for use with miniaturized micro gas chromatography systems.

### Background of the invention

Gas chromatography is a discipline of analytical chemistry for the determination and quantification of various gas compounds. Gas chromatographs (commonly referred to as GCs) typically consist of a chromatographic column for the separation of gases, a temperature controlled oven, and a detector with associated electronics to monitor column effluent. Gas chromatographs are routinely used in the determination of trace constituents in environmental monitoring, semiconductor processing materials, and pharmaceuticals. GC is considered as one of the most powerful tools available today for chemical analysis.

Some commonly used detectors are the flame ionization detector (FID), the nitrogen-phosphorus detector (NPD), the electron capture detector (ECD), and the thermal conductivity detector (TCD). The first three are all selective detectors, i.e., can only detect specific elements or compounds. The FID and the NPD require make-up gases to work while the ECD must use radioactive materials. These three detectors are very reliable and sensitive, and they are the most commonly used detectors in laboratory environment, but the requirements of using make-up gases or radioactive materials make them unsuitable for portable use. The TCD, on the other hand, is a simple, small detector which needs no make-up gas or radioactive materials to work. However, the TCD has a much lower sensitivity than the other three detectors and is rarely used in a laboratory environment.

Further descriptions of various GC detectors listed above can be found in a book edited by Herbert H. Hill and Dennis G. McMinn entitled "DETECTORS FOR CAPILLARY CHROMATOGRAPHY".

An alternative type of GC detector is the micro gas detector based on the physics of self-sustaining discharge. According to the theory of gas discharge physics, if an electric potential imposed on two electrodes across a gap filled with gas is sufficiently high, electric breakdown occurs in the gas and an ionized state is formed. An electric current flows through the ionized gas between the two electrodes. This electric current varies with gas composition since different gas molecules have different ionization characteristics. US 5591896 discloses a micro gas detector which comprises a base and first and second electrodes. The first electrode has a highly tapered tip to strengthen the electric field intensity in the gap between the two electrodes. Adapting this micro gas detector for practical use as a GC detector has proved difficult because the self-sustaining discharge is susceptible to too many factors and is often unstable. Therefore a new sensor, which can instantly reach the self-sustaining discharge and maintain itself to operate steadily in that state would be particularly useful as a GC detector.

Most GCs available today on the commercial market are heavy and large equipment designed for laboratory use. However recent progress in micromachining technology has been successfully used to miniaturize GC system to a portable size and a micro GC employing this technology is disclosed in US 5583281. It is reported that a miniaturized GC is easier to use and may even have some better performance such as faster analyzing speed when compared with desktop GC systems. The low cost, portable and easy to use micro GC systems have a potential to significantly expand the use of GCs, which may dramatically improve quality of the environment and increase productivity in the semiconductor, biomedical, and chemical industries. To date, the TCD is the most commonly used detector in portable GCs because of its small size and simplicity to use. However, the applications of portable GCs so far, due to the limitation of the TCD's low sensitivity, are mostly limited to some field uses where portability, not sensitivity, is a top priority. Therefore, a highly sensitive, low cost, and easy to use micro detector is needed.

In summary, the micro GC systems, if equipped with a high sensitivity micro detector, have the potential to dramatically improve the quality of the environment and the productivity of various high tech industries. The TCD used on most micro GCs today, although small in size and easy to use, has insufficient sensitivity. On the other hand, other well used GC detectors such as FID, NPD and ECD, all have one or more disadvantages associated therewith, including: (a) relatively large size, (b) requirement of make-up gases or radioactive material, (c) limited range of operatable temperature, (d) limited species of detectable gases, (e) expensive manufacturing, installation and operation cost.

Accordingly, there exists a need in many industries for a high sensitivity GC detector, to replace conventional detectors, having the following characteristics: (a) simple structure and small dimension, (b) non selective, (c) wide operation range of temperature, (d) high sensitivity, (e) no make-up gases or radioactive material, (f) low manufacturing, installation and operation cost.

### Summary of the invention

The invention provides a method of detecting a gas in a gas chromatograph that comprises:
a base substrate (10) having a dielectric surface;
a first electrode (12) mounted on the base (10);
a second electrode (14) mounted on the base (10), the second electrode (14) being disposed near and spaced apart from the first electrode (12), thereby forming a gap between the first electrode (12) and the second electrode (14); and
a third electrode (16) mounted on the base (10), the third electrode (16) being disposed near, but not directly between, the first electrode (12) and the second electrode (14);
the method comprising the steps of:
electrically grounding the first electrode (12);
supplying a carrier gas containing a gas for detection to the gap between the first electrode (12) and the second electrode (14);
supplying a pulse of potential, higher than the breakdown potential of the gas for detection, to the third electrode (16) to ignite a self-sustaining gas discharge and form an ionized state in the vicinity of the third electrode (16);
supplying an electric potential to the second electrode (14) to maintain the self-sustaining gas discharge;
measuring the amplitude and time dependent behavior of the electric current response of the electrodes (12,14,16) with electrical measurement means (210,212,214), whereby the change in electric current response is indicative of the gas for detection.

Once the self-sustaining discharge is established, the potential supplied to the third electrode is lowered below the detector's operating potential which is maintained by the second electrode.

### Detailed description of the principles of the invention

The micro gas detector of the present invention operates on the principle of self sustaining gas discharge. It has a first electrode tapered to an apex, a second electrode which forms a narrow gap with the first electrode, and a third electrode which is closely disposed near, but not in between, the other two electrodes to form two narrow gaps with them. This third electrode is designed as an ignition electrode for self-sustaining discharge and it is the electrode that makes stable and reliable performance possible.

In the newly developed micro gas detector, the tapered first electrode often has the lowest electric potential of all three electrodes. It is used to create a strong concentration of electric field to lower the electric potential needed during detector operation, and it is also used to help to maintain the self-sustaining discharge during the operation. The second electrode is often used to impose a positive operation potential upon the gap between the second and first electrodes to maintain the self-sustaining discharge. The third electrode is used as an ignitor to impress a short pulse of higher than the gas breakdown electrical potential on the gap between itself and the first electrode to instantly initialize the self-sustaining discharge or resume the self-sustaining discharge state when it is interrupted. The third electrode not only provides the possibility of an optimized ignition electrode, but also ensures the stable and reliable operation of the detector under the self-sustaining discharge condition. In addition, the third electrode can be designed as a shield for the ionized gases within the detector from outside disturbances, such as electromagnetic field.

The basic mode of detection employs two electrodes, a positive electrode and a negative electrode, like a diode device which conducts electricity across a gap filled with gas to be detected. Any electrode can be used as the current collection electrode. A change in the gas composition may significantly affect the ionization and thus the current. Detectable gas compounds include, e.g., alcohols, ketones, water vapor, aromatic hydrocarbons, chlorocarbons and permanent gases such as argon, neon, oxygen, nitrogen and carbon dioxide.

The detector can operate in either a DC mode or a pulsed mode. The DC mode of operation simply records the DC current flowing between two detection electrodes. The pulsed mode of operation is preferable for better performance in terms of dynamic range and stability.

The sensitivity of the detector of the present invention is affected by various factors such as the difference in the ionization characteristics between the carrier gas and the gas to be detected, and the detector's operating potential. In general, the sensitivity of the detectors of the present invention can be, compared with the TCDs, at least more than 2 orders higher.

The present invention provides a micro gas detector, which is suitable for use with GCs, especially suitable for use with micro GCs, having the following advantages: (a) simple structure and small size; (b) operable at a wide range of temperature (c) non selective; (d) no make-up gases and no radioactive material; (e) low manufacturing, installation and operation cost.

The above and other effects, features and advantages of the present invention will be apparent to those skilled in the art from the following detailed description of various embodiments thereof, in conjunction with the accompanying drawings.

### Brief description of the drawings

FIG. 1 is a schematic cross-section of a first embodiment of a micro gas detector, made in accordance with the principles of the present invention.
FIG. 2 is a schematic cross-section of a second embodiment of a micro gas detector, made in accordance with the principles of the present invention.
FIG. 3 is a schematic representation of a third embodiment of a micro gas detector, made in accordance with the principles of the present invention.
FIG. 4 is a schematic cross-section of a fourth embodiment of a micro gas detector, made in accordance with the principles of the present invention.
FIG. 5 is an exemplary electric circuit used in testing a micro gas detector, made in accordance with the principles of the present invention.
FIG. 6 is a typical chromatograph obtained with the micro gas detector made in accordance with the principle of the present invention.

### Description of preferred embodiments

The basic structure of a gas detector made in accordance with the principle of the present invention comprises a first electrode 12, a second electrode 14, and a third electrode 16, mounted on a base 10 in such a manner that the first and second electrodes face each other across a small gap, while the third electrode is closely disposed near, but not in between, said first and second electrodes.

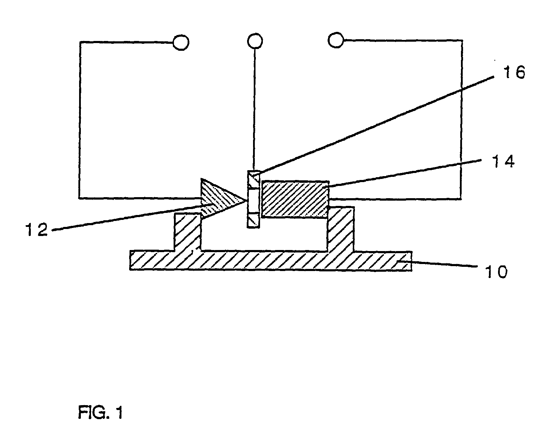

More specifically, reference is made to Fig. 1. in which is shown a first embodiment of a micro gas detector made in accordance with the principle of the present invention. The base 10 of the detector is made of non-conductive solid material. The first electrode 12 is a fine cylindrical needle tapered to an apex by chemical or electrochemical means. The second electrode 14 is a solid cylinder with a flat cut at its end perpendicular to its axis. The third electrode 16 is a short cylindrical tubing. The axes of electrodes 12, 14 and 16 are aligned to one single center line and they are preferably made of high-strength material such as tungsten or platinum.

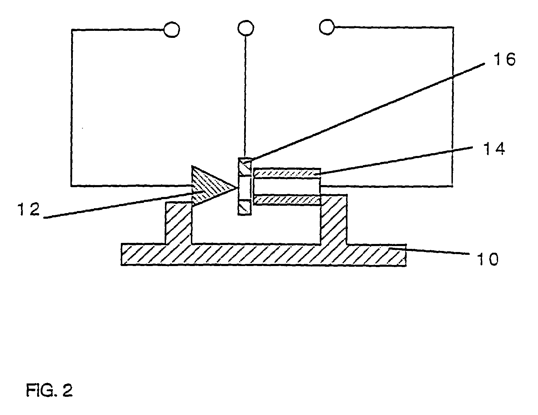

Fig. 2 shows a second embodiment of a micro gas detector made in accordance with the principles of the present invention. The finely-tapered cylindrical needle 12 serves as the first electrode, coaxial cylindrical tubings 14 and 16 function as the second electrode and the third electrode. The advantage of this arrangement is that the tubing 14 can be directly connected to a capillary of a GC, which results in higher detection efficiency and higher sensitivity. The same materials as those of the first embodiment are also preferred for the second embodiment.

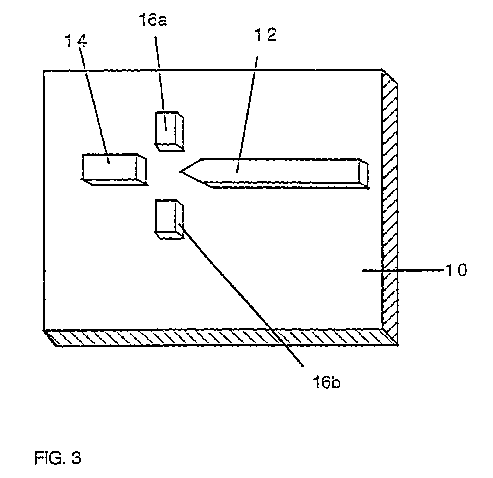

Fig. 3 shows a third embodiment designed to take advantage of surface micro machining technology. All electrodes, 12, 14, 16a and 16b are made of a thin conductive coating deposited upon a non-conductive substrate, and the material for the electrodes 12, 14 and 16 can be anything provided it is conductive and strong. This particular embodiment is especially suitable for lithographic surface micro-machining and its advantages include being very inexpensive to manufacture, and having good uniformity between detectors so made in terms of the needle sharpness of the apex of the first electrode 12, and in the clearance of the gap.

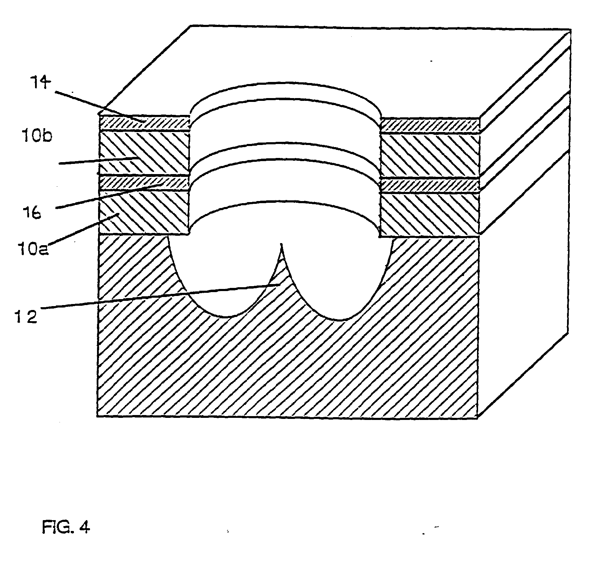

Fig. 4 shows a fourth embodiment constructed and arranged to take advantage of bulk micro-fabrication techniques. The pyramidal first electrode 12 is formed by anisotropic etching with a simple circular symmetry (annular pattern) mask, and can be made directly from highly doped silicon substrate. The second electrode 14, and the third electrode 16 are conductive layers deposited above isolation layers 10a and 10b which are equivalent of the base 10 in Figs. 1 and 2. In comparison with the surface micro-machined embodiment 3, this bulk micromachined embodiment 4 may offer a better symmetrical electric field around its needle apex, but it is somewhat more difficult and costs more to manufacture.

The optimal dimensions of the gaps in all embodiments can vary over a range from tens to hundreds of microns depending on conditions and the environment in which the detector is operated. For example, we found optimal gaps are found to be around 150 to 250 microns within pure helium gas at ambient pressure.

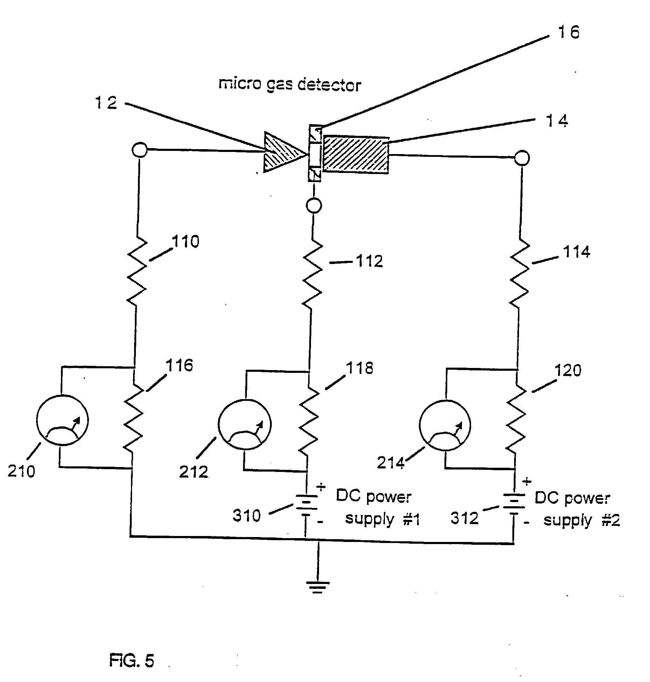

A simple circuit used for detector's tests is shown in Fig. 5. The resistors 110, 112, and 114 are used to prevent the electric current from overflowing, while the resistors 116 and 118 and 120 are used for detection current sampling. Three voltage meters 210, 212 and 214 are used to read detection signals from the detector. The detector operates with two separate power sources 310 and 312. The detector output in the circuits can also be connected to a FFT or a signal processor for further analysis. Ideally, the signal processor should be modulized and integrated with the detector on a single chip.

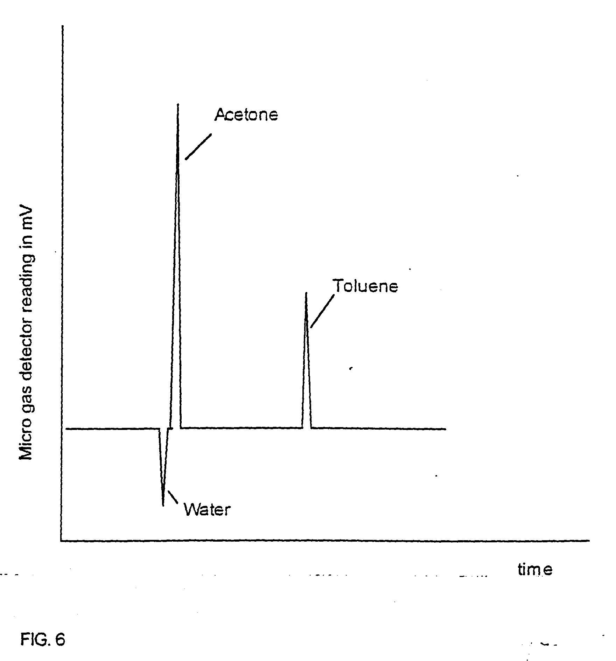

Reference is now made to Fig. 6, wherein is shown a typical chromatograph for a micro gas detector made in accordance with the principle of the present invention. The detector is operated under constant potential and the drawing shows a chromatographic response of the detector to water vapor, acetone and toluene with pure helium as carrier gas. Specifically, the GC used in this test is Shimadzu 17A, the oven and the detector temperature are all set at 80°C, and the detectability or the sensitivity of the tested prototype micro gas detector is better than nanogram for all three species.

Among all the micro gas detector embodiments, the first and second embodiments are suitable for fabrication using conventional methods of precision manufacturing. Typically, the dimensional tolerance of the detector's electrodes, the gaps and the alignment of axes, should be in the order of microns. The third and fourth embodiments are preferred for mass-production applications because they can take advantage of the non-assembly micro-fabrication techniques commonly used in the semiconductor industry to further lower the manufacturing cost. However, micromachined detectors, due to the limitation in fabrication process, may have less ideal configurations and thus less optimized electric field, and consequently less than best performance in comparison with those fabricated by conventional precision manufacturing methods.

Fabrication of these detectors with micromachining technology presents no particular difficulty to those who are familiar with lithographic micro-machining techniques. A typical process for the third embodiment is only described here as an example of micromachining technology for ease of reference. The process follows: (a) depositing a thin silicon nitride dielectric layer on a silicon substrate (a wafer) using a microfabrication process, for example CVD (chemical vapor deposition); (b) depositing a high quality polysilicon layer above the silicon nitride by LPCVD (low pressure CVD); (c) depositing a PSG (phosphorus-doped silicon dioxide) layer above the polysilicon layer; (d) doping the polysilicon layer trough the PSG layer by 1000°C annealing the wafer for one hour; (e) spin-coating a layer of photoresist above the PSG; (f) patterning (i.e. exposing and developing) electrodes and electric connection pads with a photomask designed according to the third embodiment; (g) etching the PSG layer with a photoresist mask by RIE (reactive ion etching); (h) etching the polysilicon layer with the PSG mask by RIE (reactive ion etching) (i) sputtering a gold layer on the pads for wire-bonding; (j) wire-bonding and packaging the detectors with appropriate packaging material. Optionally, a circuitry module for powering the detector, pulse generation and signal analysis could also be fabricated on the same silicon substrate as the detectors.

### Operation of preferred embodiments

To have practical usefulness, a GC detector must have a repeatable, specific output with respect to a specific gas compound. In the present invention, the detector must operate in the highly stable self-sustaining gas discharge state. The detector of the present invention has a designated third electrode for instant ignition of the self-sustaining discharge. In addition the third electrode is also used to resume the self-sustaining discharge when it is interrupted. In a typical operation, the detector starts with a short pulse of higher than the breakdown potential to instantly initialize the self-sustaining discharge. Once the state of the self-sustaining discharge is established, the potential imposed upon the third electrode is lowered below the detector's operation potential which is maintained by the second electrode. Since all three electrodes are closely located, the role of the positive electrode of the self-sustaining discharge will naturally be taken over from the third electrode by the second electrode. This arrangement of the detector allows the optimal, and reliable design of every electrode, and it enables instant initialization and ensures continuous operation. Furthermore, it allows the detector to operate at a potential lower than the breakdown potential which is often advantageous. In addition, the cylindrical shaped third electrode of the first and second embodiments can isolate the electric field within the detector from various external effects such as electromagnetic fields, and it helps to create a very stable, symmetric electric field within the detector to further stabilize the self-sustaining discharge of the gases.

When a gas compound flows into the detector with carrier gas, it participates in the self-sustaining discharge process and affects the state of the ionization within the gaps. This change of the ionization state with gas compound can be measured by electric current flowing from one electrode to another. Although any electrode can be used for current detection, the limited surface area of the tapered first electrode may restrict the increase of the electric current, and further results in a lower detection sensitivity. The third electrode, which has no other use after the self-sustaining discharge is ignited, is preferred as a negative electrode because of its larger surface. Naturally, the potential imposed upon this negative detection electrode, the third electrode, must be lower than the operation potential imposed upon the second electrode. The first electrode in this case, although not used as a detection electrode, is used as an electron emission source to help maintain a stable self-sustaining discharge during operation, as well as the mechanism to lower the detector's operation potential with an enhanced electric field.

Clearly, in order for there to be a sensing of electric current or potential between the electrodes, there must be a conductive means associated therewith, and electrical measurement means must be provided. In general, the conductive wires in the third and fourth embodiments are patterned on the same layer of material used for electrodes. Alternatively, wire bonding could be used. The electrical measurement means between the electrodes may be such as an ammeter, a pulse counter, a voltmeter, or a combination thereof.

The basic mode of operation is that of using two detection electrodes like a diode device that conducts electricity across the gap filled with the gas. The detectors function in either a DC mode or a pulsed mode. When the detector is operated in a DC mode, the readout signal of the electric current is actually a deviation from its carrier gas background level. When it is used in a pulsed mode, it operates either with fixed frequency mode, or constant current pulsed mode. The DC mode has simpler electronics but the advantage of the pulsed mode, such as wider dynamics range, better stability, and minimal needle apex erosion may well justify the added cost of electronics.

The gas species to be detected, when passing through the detector, will either increase the current by contributing more electrons and ions or reduce the current by capturing some electrons and ions produced by the carrier gas. The gas compounds that can be detected include, *inter alia,* alcohols, ketones, water vapor, aromatic hydrocarbons, chlorocarbons and permanent gases. The increase (or decrease) in electric current is generally proportional to the degree of concentration of the gas compound, thereby permitting quantitative determination.

In conclusion, the present invention provides a type of micro gas detector which is most suitable for micro GC use because it has a much higher sensitivity than TCDs. The detector of the present invention is also suitable for regular GC use because it has the following desirable characteristics: (a) simple structure and very small size, (b) no make-up gases and no radioactive material, (c) non selective, (d) wide operation range of temperature, (e) low manufacturing, installation and operation cost. (f) micro-machinable structure.

While certain specific embodiments and details have been described in order to illustrate the present invention, it will be apparent to those skilled in the art that many modifications can be made therein. For example, the detector can have a multiple sensing unit to form a wheatstone bridge, or have an integral signal processor fabricated on one chip.

## Claims

1. A method of detecting a gas in a gas chromatograph that comprises:
a base substrate (10) having a dielectric surface;
a first electrode (12) mounted on the base (10);
a second electrode (14) mounted on the base (10), the second electrode (14) being disposed near and spaced apart from the first electrode (12), thereby forming a gap between the first electrode (12) and the second electrode (14); and
a third electrode (16) mounted on the base (10), the third electrode (16) being disposed near, but not directly between, the first electrode (12) and the second electrode (14);
the method comprising the steps of:
electrically grounding the first electrode (12);
supplying a carrier gas containing a gas for detection to the gap between the first electrode (12) and the second electrode (14);
supplying a pulse of potential, higher than the breakdown potential of the gas for detection, to the third electrode (16) to ignite a self-sustaining gas discharge and form an ionized state in the vicinity of the third electrode (16);
supplying an electric potential to the second electrode (14) to maintain the self-sustaining gas discharge;
measuring the amplitude and time dependent behavior of the electric current response of the electrodes (12,14,16) with electrical measurement means (210,212,214), whereby the change in electric current response is indicative of the gas for detection.

2. A method according to claim 1 further comprising the step of lowering the potential supplied to the third electrode below the operating potential supplied to the second electrode once the self-sustaining discharge is established.
